# EUROPÄISCHE PATENTANMELDUNG

(11) **EP 0 663 262 A2**
(43) Veröffentlichungstag der Anmeldung: **19.07.1995**
(21) Anmeldenummer: 95100468.8
(22) Anmeldetag: 14.01.1995
(51) Int. Cl.: B27M 1/08, B65G 25/02

(54) **Abbundanlage mit Transporteinrichtung**

(30) Priorität: 18.01.1994 DE 4401271
(71) Anmelder: SCHMIDLER MASCHINENBAU GmbH, D-91180 Heideck (DE)
(72) Erfinder: Schmidler, Richard, D-91180 Heideck (DE); Schmidler, Hans, D-91180 Heideck (DE)

(57) **Zusammenfassung**

Eine Abbundanlage (10) weist mehrere, vorzugsweise zwei im wesentlichen baugleiche. Transporteinrichtungen (11) für in Längsrichtung möglichst schlupffrei von einer Werkzeugstation zu nächsten zu bewegende Balken (12) auf. Die Transporteinrichtungen sind unabhängig voneinander, über jeweils fast die gesamte Bearbeitungslänge der Abbundanlage und ihre Werkzeugstationen hinweg, längs einer gemeinsamen Führungsbahn (18) verfahrbar. Wenn die vordere Transporteinrichtung ihren in der letzten der Werkzeugstationen fertig bearbeiteten Balken abgeliefert hat, übernimmt sie den Folge-Balken von der hinteren Transporteinrichtung an der dort gerade erreichten Werkzeugstation für die noch folgenden Werkzeugstationen. Deshalb kann nun auch die hintere Transporteinrichtung wieder zurückfahren und einen neu zugeführten Balken zur Bearbeitung in der Folge der Werkzeugstationen übernehmen, bis die vordere Transporteinrichtung erneut verfügbar ist.

## Beschreibung

Die Erfindung betrifft eine Abbundanlage mit Transporteinrichtung gemaß dem Oberbegriff des Anspruches 1.

Ähnlich den seit langem am Markt eingeführten BUR-MEK-Transferstationen zur Bearbeitung von Riegel- oder Fachwerken, etwa für den Fertighausbau, sind für die weitgehend automatisierte zimmermannsmäßige Bearbeitung von Holzbalken bzw. -brettern für Bundwerke, etwa für Tragkonstruktionen im Holz-Ingenieurbau, die Abbundanlagen branchenbekannt, vgl. in der Fachzeitschrift "bauen mit holz" Heft 2/1992 (94. Jahrgang) die Seiten 112 - 130, oder die Beschreibungseinleitung in der EP-OS 0 319 032. Für den Transport je eines zu bearbeitenden Balkens durch die Anlage, unter jeweils präziser Positionierung an den einzelnen aufeinanderfolgenden Werkzeugstationen, hat sich die Transporteinrichtung mit Anlageschuh gemaß dem eigenen DE-GM 92 14 929 bewährt. Diese Transporteinrichtung ist über die gesamte Länge der Abbundanlage an Werkzeugstationen vorbei verfahrbar, um den zugeführten Balken an der Einförder-Rollenbahn zu übernehmen, ihn nacheinander positionsgenau in die Spanneinrichtungen an den aufeinanderfolgenden Werkzeugstationen zu überführen und den fertig bearbeiteten Balken schließlich ans Querförder-Ausschiebelineal zu übergeben. Dann wird die Transporteinrichtung, der Bearbeitungs-Vorschubrichtung entgegen, an den Anfang der Abbundanlage zurück gefahren, um dort den nächsten Balken zu übernehmen.

Da alle maßgenauen Bearbeitungsvorgänge, wie Fräsen und Bohren (vgl. die WO 89/05709 oder die schon zitierte EP-OS 0 319 032), längs des Balkens in Relation zu des-sem bereits profilierten Stirnende angesetzt werden, ist gewöhnlich die erste Werkzeugstation der Abbundanlage eine Kappsäge mit in ihrer Richtung und Neigung einstellbarem Sägeblatt, vgl. die eigene DE-PS 38 18 468. Weil hier also der Balken noch nicht maßgenau zugeführt werden muß, ist es aus der EP-OS 0 561 227, aber auch früher schon aus der Sägewerkspraxis, bekannt, zur Übergabe des Balkens vom Eingangsbereich an die erste Säge eine gesonderte Fördereinrichtung vorzusehen, an die geringere Präzisionsansprüche gestellt werden können, als an die der ersten Säge dann folgende Transporteinrichtung, die den nun stirnseitig gekappten Balken danach über die weitere Länge der Abbundanlage präzise zur jeweiligen bearbeitungsgemäßen Werkzeugstation mitnimmt.

Vorliegender Erfindung liegt dagegen die technische Problemstellung einer besseren Ausnutzung der apparativen Gegebenheiten der herkömmlichen Transporteinrichtung mit dem Ziele einer rascheren und flexibleren Bearbeitung insbesondere auch bei für aufeinanderfolgend zugeführte Balken unterschiedlichen Bearbeitungsprogrammen zugrunde.

Diese Aufgabe ist bei einer Abbundanlage gattungsgemäßer Art durch die Merkmale des Patentanspruches 1 gelöst. Nach jener Lösung sind mehrere, vorzugsweise zwei baugleiche. Transporteinrichtungen vorgesehen, die beide und unabhängig voneinander über praktisch die gesamte Länge der Abbundanlage verfahrbar sind; mit Übergabe des Folgebalkens an die vordere Transporteinrichtung nicht mehr zwingend an der ersten Säge, sondern nun maßgenau an einer beliebigen gerade erreichten Werkzeugstation, nachdem der fertig bearbeitete Balken an den Auswerfer übergeben wurde. Die dadurch gewonnene Flexibilität in der Übernahme und Bearbeitung des Folgebalkens erbringt ohne Qualitätseinbußen eine außerordentliche Steigerung des Durchsatzes in der Abbundanlage. Ergänzend wird hinsichtlich der erfindungsgemäßen Lösung auch auf die Unteransprüche, auf die nachfolgende Zeichnungs-Beschreibung und auf deren abschließende Zusammenfassung ausdrücklich Bezug genommen.

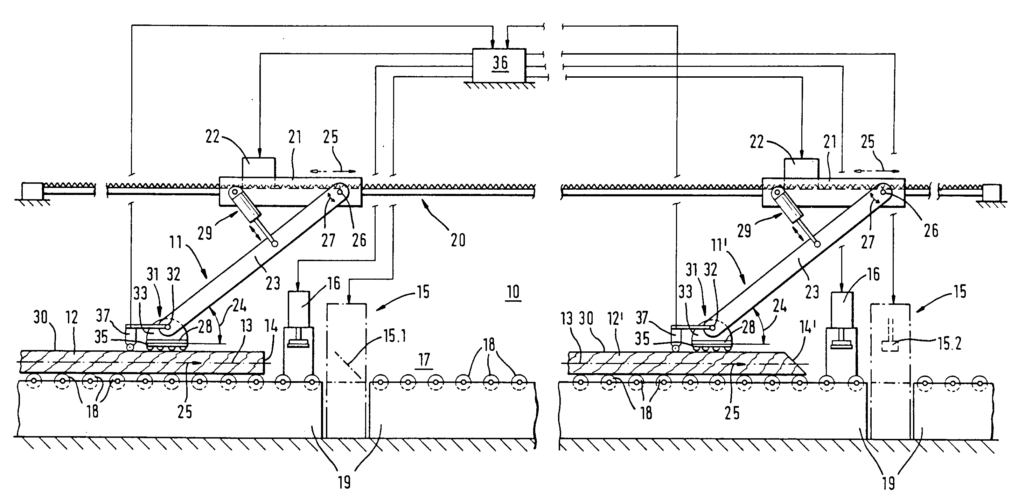

Die einzige Figur der Zeichnung zeigt, auf das Prinzipielle vereinfacht und nicht maßstabsgerecht skizziert, eine erfindungsgemäß ausgestattete Abbundanlage, die zwei gleiche Transporteinrichtungen aufweist, welche jeweils unter schlupfarmer Mitnahme eines zu bearbeitenden Balkens unabhängig voneinander längs einer gerätefesten Zahnstange definiert verfahrbar sind.

Die dargestellte Abbundanlage 10 ist mit mehreren, vorzugsweise mit zwei Transporteinrichtungen 11 ausgestattet. Diese dienen jeweils dem präzise gesteuerten Vorschub eines (Holz-) Balkens 12 in Richtung seiner Längsachse 13 in aufeinanderfolgende Bearbeitungs-Positionen. Die Längsbewegung des Balkens 12 erfolgt dazu auf einem, nicht dem Vorschub selbst dienenden, Führungsbett 17. Bei dem kann es sich etwa um einen Auflagetisch, um einen spurgeführten Wagen oder wie dargestellt um eine Rollenbahn 18 auf einem Maschinengestell 19 handeln. In den Werkzeugstationen 15 wird der Balken 12 jeweils für den bevorstehenden Bearbeitungsgang vorübergehend mittels Spanneinrichtungen 16 festgelegt. In der ersten der Werkzeugstationen 15 wird das Stirnende 14 des Balkens 12 mittels einer Schwenk-Kapp-Säge 15.1 profiliert. Es folgen in weiteren Werkzeugstationen 15 die weiteren Bearbeitungen des Balkens 12 für das später damit zu erstellende Bundwerk, etwa an einer Bohreinheit und an einer Fräseinrichtung 15.2. Deren Werkzeuge und Schutzabdeckungen schwenken nach dem jeweiligen Bearbeitungsvorgang vom Balken 12 zurück, um eine Kollision mit der Transporteinrichtung 11 beim Weiterschieben des dafür wieder gelösten Balkens 12 in die nächste Werkzeugstation 15 zu vermeiden.

Wie die Werkzeugstationen 15 ortsfest bezüglich des Maschinengestells 19 angeordnet sind, so verläuft auch ortsfest längs dessen Führungsbettes 17 wenigstens eine (und vorzugsweise nur eine gemeinsame) Führungsbahn 20 für die Schlepporgane 21 der Transporteinrichtungen 11. Die Schlepporgane 21 sind etwa ausgebildet als Schubmuttern auf (wenigstens) einer feststehenden Spindel oder wie dargestellt als motorgetriebene Laufkatzen auf (wenigstens) einer feststehenden Schiene mit einer z.B. oberhalb oder bevorzugt seitlich angeordneten Zahnstange. Jedes der Schlepporgane 21 verfügt über einen eigenen Motor 22 zur individuell vorgebbaren, definierten Bewegung, etwa durch Eingriff eines Ritzels in die Zahnstange für die Reaktionskraftüberleitung und gleichzeitig für inkrementales Auszählen (zum Rückmelden an die Zentralsteuerung 36) der gerade erreichten Position relativ zum Maschinengestell 19 der Abbundanlage 10.

An jedem Schlepporgan 21 ist ein hier einarmig ausgebildeter Hebel 23 angelenkt. Der erstreckt sich vorzugsweise wie dargestellt unter spitzem Winkel 24 (bezüglich der Vorschubrichtung 25 durch die Abbundanlage 10) zu dem Balken 12 hin. Um die jeweilige Hebel-Schwenkachse 26 kann ein Drehmoment 27 wahlweise so zur Wirkung gebracht werden, daß das gegenüberliegende, freie Ende des Hebels 23 mit einem daran vorgesehenen Schleppschuh 28 gegen seinen Balken 12 andrückt oder von ihm abhebt. Wenn die Schwenkachse 26 wie dargestellt in Vorschubrichtung 25 vor dem Schleppschuh 28 liegt, wird der Balken 12 bei anliegendem Hebel 23 vom Schlepporgan 21 nachgezogen. Das weist die funktionalen Vorteile auf, jegliche Verkantungsgefahr auch bei rascher Vorbewegung des Balkens 12 zu vermeiden. Der Hebel 23 kann aber auch als Kolben ausgelegt mehr oder weniger senkrecht, oder sogar unter stumpfem Winkel bezüglich der Vorschubrichtung 25 schiebend, am Balken 12 angreifen.

Zum Anlegen oder Abheben des Schleppschuhes 28, ibs. im Wechsel mit dem Wirksamwerden der Spanneinrichtungen 16 sowie am Anfang bzw. am Ende der Rollenbahn 18, kann das Drehmoment 27 von einem hydraulischen oder pneumatischen Schub-Zug-Kolben 29 hervorgerufen werden, der versetzt gegenüber der Schwenkachse 26 am jeweiligen Hebel 23 angelenkt ist, bei einarmigem Hebel 23 wie in der Zeichnung skizziert also zwischen Andruckende 31 und Schwenkachse 26.

Die möglichst schlupfarme Kopplung zwischen der Oberfläche 30 des Balkens 12 und dem Anlageschuh 28 kann beschädigungsfrei kraftschlüssig über eine austauschbar unter dem Anlageschuh 28 montierte Sohle 35 mit einem Gummipolster (von einer Oberfläche großen Reibungskoeffizientens bezüglich des Holzes) oder mit einer Profilplatte (mit stumpfwinkligen Vorsprüngen) erfolgen. Der zuverlässige, verkantungsfreie Kraftschluß zwischen der Transporteinrichtung 11 und dem Balken 12 wird noch gefördert, wenn der Anlageschuh 28 unabhängig von der momentan gegebenen Stärke des Balkens 12, also vom gerade wirksamen Schlepp-Winkel 24, möglichst vollflächig an der ihm zugewandten prismatischen Oberfläche 30 des Balken 12 anliegt. Dafür ist der Anlageschuh 28 seinerseits am Andruckende 31 des Hebels 23 mittels eines Scharnierbleches 33 um eine Ausgleichsachse 32 verschwenkbar gehaltert, die parallel zur Oberfläche 30 und quer zur Vorschubrichtung 25 des Balkens 12, also parallel zur Schwenkachse 26 des Hebels 23, verläuft. Wegen näherer Einzelheiten wird ausdrücklich auf das DE-GM 92 14 929.4 und die DE-OS 42 14 057.9 Bezug genommen. Wenn jedoch Oberflächenbeschädigungen zulässig sind, können vom jeweiligen Anlageschuh 28 her mehrere kurze Nadeln oder ein einzelner längerer Dorn ins Material eingestochen werden; günstiger ist dann allerdings eine definierte und so später wieder sauber verschließbare Bohrung, in welcher der Bohrer selbst (vom Anlageschuh 28 her) auch noch für die Fortbewegung des Balkens 12 im Eingriff bleibt, wie in der eigenen deutschen Patentanmeldung P 43 17 767.0 vom 28. Mai 1993 näher beschrieben.

Um zum definierten Balken-Vorschub schlupfbedingte Bewegungsfehler des Balkens 12 relativ zu seiner Transporteinrichtung 11 gleich kompensieren zu können, erhält eine zentrale Steuerung 36 für die Motore 22 von Schlupfmessern 37 aktuelle Meßwerte über die Relativbewegung zwischen der Balken-Oberfläche 30 und dem Anlageschuh 28 der jeweiligen Transporteinrichtung 11, wie in der eigenen deutschen Patentanmeldung P 42 37 048 näher beschrieben.

Die wechselweisen und überlappenden Funktionen der Motore 22, der Spanneinrichtungen 16 und der Werkzeugstationen 15 werden für den Vorschub und für die Bearbeitungs-Positionierung des jeweiligen Balkens 12 ebenfalls von der zentralen Steuerung 36 koordiniert, die auf die aktuellen geometrischen Erfordernisse des aus den Balken 12 zu erstellenden Bundwerkes programmiert ist.

Da die Transporteinrichtungen 11 unabhängig voneinander verfahrbar sind, kann die eine von ihnen schon einen neuen Balken 12 der Schwenk-Kapp-Säge 15.1 und danach auch noch den ihr im Anfangsbereich der Abbundanlage 10 folgenden Werkzeugstationen 15 zuführen, während weiter vorne zum Endbereich der Abbundanlage 10 hin noch der vorangehend zugeführt gewesene Balken 12' etwa an einer Fräseinrichtung 15.2 seine letzten Oberflächen-Profilierungen erfährt. Dieser Balken 12' wird dann einem Querförderer zur Ausgabe aus der Abbundanlage 10 übergeben. Die damit frei gewordene vordere Transporteinrichtung 11' kann nun von ihrem Motor 22 längs der Zahnstange, der bisherigen Vorschubrichtung 25 entgegen, zurückgefahren werden, um den nachfolgenden Balken 12 zu übernehmen, der dafür gerade von der hinteren Transporteinrichtung 11 freigegeben wurde, der aber bis zur Übernahme noch in der Spanneinrichtung 16 seiner aktuellen Werkzeugstation 15 festgeklemmt bleibt. Während also nun der Folge-Balken 12 von der vorderen Transporteinrichtung 11' übernommen wird, kann die hintere Transporteinrichtung 11 einen neuen Balken von der Zuführung übernehmen und der Schwenk-Kapp-Säge 15.1 sowie den ihr folgenden Werkzeugstationen 15 zuführen. Deren Steuerung kann nun schon hinsichtlich des aktuellen Balkens 12 auf andere Bearbeitungserfordernisse umgeschaltet sein, obgleich der vorangehende Balken 12' die vorderen Werkzeugstationen 15 der Abbundanlage 10 mit dem bisherigen Bearbeitungsprogramm noch garnicht alle passiert hat.

Damit die Verfahrwege der Transporteinrichtungen 11 sich auch überschneiden können, kann grundsätzlich daran gedacht werden, ihnen eigene, gegeneinander parallel versetzte Führungsbahnen 20 zuzuordnen. Dieser konstruktive Mehraufwand ist in der Praxis der Abbundanligen 10 aber nicht erforderlich, weil sich ja die Wege der auf dem Führungsbett 17 in der selben Spur nacheinander fortbewegten Balken 12 ohnehin nicht überschneiden. Der Verfahrweg der Transporteinrichtungen 11 ist also nur am Anfang und am Ende der Führungsbahn 20 durch jeweils die andere der beiden vorgesehenen Transporteinrichtungen 11 (im Vergleich zur der Gesamtlänge der Abbundanlage 10) eingeschränkt, wenn und soweit die Führungsbahn 20 nicht die Länge der Abbundanlage 10 überragt.

## Patentansprüche

1. Abbundanlage (10) mit quer zur Vorschubrichtung (25) angreifender Transporteinrichtung (11) für einen damit in Längsrichtung zu aufeinanderfolgenden Bearbeitungsstationen (15) zu bewegenden Balken (12), dadurch gekennzeichnet,
daß mehrere in jener Längsrichtung gegeneinander versetzt und relativ zueinander an den Werkzeugstationen (15) vorbei verfahrbare solche Transporteinrichtungen (11, 11') für in verschiedenen Werkzeugstationen (15) aufeinanderfolgend zu bearbeitende Balken (12) vorgesehen sind, von denen an frei vorgebbarer Position der Abbundanlage 10 ein vorderer Balken (12') durch eine freigewordene und zu ihm zurückgefahrene vordere Transporteinrichtung (11') zu weiteren Werkzeugstationen (15) übernehmbar ist, damit die freigewordene rückwärtigste der Transporteinrichtungen (11) zurückfahren kann, um währenddessen bereits einen weiteren Balken (12) zu- und durch die Werkzeugstationen (15) nachzuführen.

2. Abbundanlage nach Anspruch 1, dadurch gekennzeichnet,
daß mehrere im wesentlichen baugleiche Transporteinrichtungen (11) vorgesehen sind.

3. Abbundanlage nach einem der vorangehenden Ansprüche, dadurch gekennzeichnet,
daß zwei gleiche Transporteinrichtungen (11) vorgesehen sind.

4. Abbundanlage nach einem der vorangehenden Ansprüche, dadurch gekennzeichnet,
daß die Transporteinrichtungen (11) längs einer gemeinsamen Führungsbahn (20) verfahrbar sind.

5. Abundanlage nach einem der vorangehenden Ansprüche, dadurch gekennzeichnet,
daß jede der Transporteinrichtungen (11) mit einem, aus einer programmierbaren Steuerung (36) individuell anregbaren, Motor (22) und Positionsgeber zum definierten Verfahren längs einer Zahnstange ausgestattet ist.

6. Abbundanlage nach einem der vorangehenden Ansprüche,
gekennzeichnet durch einen Transport-Stempel oder -Hebel (23) zum Andrücken gegen die Oberfläche (30) des Balkens (12).

7. Abbundanlage nach Anspruch 6,
gekennzeichnet durch einen beweglich angelenkten Anlageschuh (28) zum Andrücken gegen die Oberfläche (30) des Balkens (12).

8. Abbundanlage nach Anspruch 7, dadurch gekennzeichnet,
daß der Anlageschuh (28) wahlweise mit einer grob profilierten Platte oder mit einem Haftpolster (34) aus wenig kompressiblem, gummiartigem Material mit einer hohe Haftreibung vermittelnden Oberfläche zum Andrücken gegen die Oberfläche (30) des Balkens (12) ausstattbar ist.

9. Abbundanlage nach Anspruch 6 oder 7,
gekennzeichnet durch einen Bohrer als Mitnehmer für den Balken (12).

10. Abbundanlage nach einem der vorangehenden Ansprüche,
gekennzeichnet durch einen zwischen der Transporteinrichtung (11) und der Balken-Oberfläche (30) wirksamen Schlupfmesser (37).
